# FASCICULE DE BREVET EUROPEEN

(11) **EP 0 785 646 B1**
(45) Date de publication et mention de la délivrance du brevet: **06.05.2004**
(21) Numéro de dépôt: 97200116.8
(22) Date de dépôt: 15.01.1997
(51) Int. Cl.: H04L 5/18

(54) **Répéteur bidirectionnel**
Bidirektionaler Relaisverstärker
Bidirectional repeater

(30) Priorité: 18.01.1996 FR 9600540
(43) Date de publication de la demande: 23.07.1997
(73) Titulaire: Koninklijke Philips Electronics N.V., 5621 BA Eindhoven (NL)
(72) Inventeur: Maugars, Philippe, 75008 Paris (FR)
(74) Mandataire: Charpail, François

(56) Documents cités:
- EP-A- 0 381 565
- DE-A- 4 113 613
- GB-A- 430 297
- US-A- 3 499 985
- US-A- 5 331 224
- ELECTRONIC DESIGN, vol. 37, no. 10, 11 Mai 1989, HASBROUCK HEIGHTS, NEW JERSEY US, pages 105-108, 110, XP000046046 MURDOCK & GOLDIE: "Build a driection-sensing bidirectional repeater"

## Description

La présente invention concerne un dispositif de transmission de données comprenant au moins deux lignes au travers desquelles circulent des données numériques dont les niveaux logiques sont définis, pour chaque ligne, par des potentiels pris à des bornes positive et négative d'alimentation de ladite ligne, et un module d'interface effectuant la liaison entre les lignes.

Un tel dispositif est connu du brevet allemand n° DE 41 13 613 A1. Ce dispositif permettant la transmission de données numériques d'une ligne à une autre nécessite une identité des caractéristiques électriques des deux lignes avec celles du module d'interface, en particulier des tensions d'alimentations identiques. En effet, les niveaux logiques haut et bas doivent être définis identiquement sur les lignes et au sein du module d'interface, ce dernier définissant à sa sortie le niveau logique de la donnée transmise.

La présente invention a pour but de remédier à cet inconvénient, en proposant un dispositif de transmission dont le module d'interface réalise une adaptation systématique du niveau logique de la donnée transmise aux caractéristiques électriques de la ligne destinataire.

En effet, selon la présente invention, un dispositif de transmission du type défini dans le paragraphe introductif est caractérisé en ce que :
. le module d'interface comporte d'une part au moins deux dispositifs dits de gestion, chacun étant dédié à une seule ligne de transmission, et d'autre part au moins deux dispositifs dits de contrôle de potentiel, chacun pilotant une seule ligne de transmission,
. chaque dispositif de contrôle est muni d'une entrée dite entrée de commande et de moyens pour reproduire, sur la ligne qu'il pilote, une donnée définie par un signal reçu sur ladite entrée de commande,
. chaque dispositif de gestion est muni de moyens pour lui permettre de se faire désactiver par un autre dispositif de gestion, muni en outre de moyens pour détecter la présence, sur la ligne à laquelle il est dédié, d'une donnée à transmettre à au moins une autre ligne, muni, de plus, de moyens pour commander la désactivation d'au moins un autre dispositif de gestion dédié à une autre ligne, muni enfin de moyens pour définir au dispositif de contrôle du potentiel de ladite autre ligne la donnée qu'il doit reproduire.

Cette dissociation des dispositifs de gestion et de contrôle permet de réaliser simplement, au sein du module d'interface, l'adaptation systématique du niveau logique de la donnée transmise aux caractéristiques électriques de la ligne destinataire.

Dans un mode de réalisation particulier de l'invention, un dispositif de transmission de données tel que décrit ci-dessus est caractérisé en ce que chaque dispositif de contrôle comporte un premier interrupteur placé entre la ligne pilotée par le dispositif de contrôle et la borne positive d'alimentation de ladite ligne, et un deuxième interrupteur placé entre la ligne pilotée par le dispositif de contrôle et la borne négative d'alimentation de ladite ligne, le premier interrupteur étant commandé par le signal reçu sur l'entrée de commande du dispositif de contrôle, le deuxième interrupteur étant commandé par l'inverse dudit signal, les deux interrupteurs ayant une impédance interne faible par rapport à celle de la ligne pilotée par le dispositif de contrôle pendant une période durant laquelle ils commutent et une impédance interne élevée par rapport à celle de ladite ligne pendant une période durant laquelle ils sont maintenus en position.

Une variante de ce mode de réalisation présente un dispositif de transmission caractérisé en ce que chaque dispositif de gestion comporte une bascule D, dont l'entrée de données est reliée à un potentiel correspondant au niveau logique 1, bascule D dont la sortie non-inverseuse est reliée à une entrée de commande du dispositif de contrôle pilotant l'autre ligne, bascule D dont la sortie inverseuse est destinée à fournir un signal de désactivation au dispositif de gestion dédié à l'autre ligne, bascule D dont l'entrée de remise à zéro est reliée à la ligne à laquelle le dispositif de gestion est dédié, dispositif de gestion comportant en outre un inverseur, une cellule à retard et une porte logique ET, la ligne à laquelle le dispositif de gestion est dédié étant reliée à l'entrée de l'inverseur, inverseur dont la sortie est connectée à l'entrée de la cellule à retard, cellule à retard dont la sortie est reliée à une entrée de la porte logique ET dont au moins une autre entrée est destinée à recevoir un signal de désactivation issu d'au moins un dispositif de gestion dédié à une autre ligne, porte logique ET dont la sortie est reliée à une entrée d'horloge de la bascule D.

Dans un autre mode de réalisation de l'invention, un dispositif de transmission de données est caractérisé en ce que chaque dispositif de contrôle comporte un premier interrupteur placé entre la ligne pilotée par le dispositif de contrôle et la borne positive d'alimentation de ladite ligne, et un deuxième interrupteur placé entre la ligne pilotée par le dispositif de contrôle et la borne négative d'alimentation de ladite ligne, les deux interrupteurs ayant une impédance interne faible par rapport à celle de la ligne pilotée par le dispositif de contrôle pendant une période durant laquelle ils commutent et une impédance interne élevée par rapport à celle de ladite ligne pendant une période durant laquelle ils sont maintenus en position, les deux interrupteurs ayant des entrées de commande de polarités opposées et étant commandés par le signal reçu sur l'entrée de commande du dispositif de contrôle.

Une variante de ce mode de réalisation présente un dispositif de transmission caractérisé en ce que chaque dispositif de gestion comporte une bascule D, dont une entrée de données est reliée à un potentiel correspondant au niveau logique 1, bascule D dont la sortie non-inverseuse est reliée à l'entrée de commande du dispositif de contrôle pilotant l'autre ligne, bascule D dont la sortie inverseuse est destinée à fournir un signal de désactivation au dispositif de gestion dédié à l'autre ligne, bascule D dont l'entrée de remise à zéro est reliée à la ligne à laquelle le dispositif de gestion est dédié, dispositif de gestion comportant en outre un inverseur, une cellule à retard et une porte logique ET, la ligne à laquelle le dispositif de gestion est dédié étant reliée à l'entrée de l'inverseur, inverseur dont la sortie est connectée à l'entrée d'une cellule à retard, cellule à retard dont la sortie est reliée à une entrée d'une porte logique ET dont au moins une autre entrée est destinée à recevoir un signal de désactivation issu d'au moins un dispositif de gestion dédié à une autre ligne, porte logique ET dont la sortie est reliée à une entrée d'horloge de la bascule D.

Dans chacun de ces modes de réalisation, les niveaux logiques des données transmises par le module d'interface correspondent systématiquement aux niveaux logiques définis par les caractéristiques électriques des lignes destinataires. Toutefois, les modes de réalisation décrits plus haut nécessitent la définition d'un niveau logique correspondant à l'état de repos des lignes, les données significatives à transmettre correspondant obligatoirement au niveau logique inverse. Les modes de réalisation des dispositifs de gestion décrits plus haut présentent ainsi des dispositifs ne pouvant transmettre que des niveaux logiques 0, le niveau 1 correspondant à l'état de repos des lignes. Dans certains cas, il peut être utile de pouvoir transmettre des niveaux logiques 1, sans avoir pour autant à employer un dispositif de transmission différent.

Une variante de l'invention présente donc un dispositif de transmission de données caractérisé en ce que chaque dispositif de gestion comporte une bascule T, présentant une sortie inverseuse et une entrée d'horloge, ladite sortie commutant à chaque front montant du signal reçu sur l'entrée d'horloge, bascule T dont la sortie inverseuse est reliée à l'entrée de commande d'au moins un dispositif de contrôle pilotant une autre ligne, bascule T dont la sortie inverseuse est destinée à fournir un signal de désactivation au dispositif de gestion dédié à l'autre ligne, bascule T dont la sortie inverseuse est initialisée au niveau logique correspondant à l'état de repos des lignes lors de la mise en fonctionnement du dispositif de transmission, en ce que chaque dispositif de gestion comporte en outre un interrupteur dont l'ouverture est commandée par au moins un signal de désactivation issu d'un dispositif de gestion dédié à l'autre ligne, interrupteur dont une première borne est reliée à la ligne à laquelle est dédié le dispositif de gestion et dont une deuxième borne est connectée à l'entrée d'une cellule à retard, cellule à retard dont la sortie est reliée à une entrée d'une porte logique OU-EXCLUSIF deux entrées dont l'autre entrée est connectée à la deuxième borne de l'interrupteur, porte logique OU-EXCLUSIF dont la sortie est reliée à l'entrée d'horloge de la bascule T.

Une autre variante de l'invention présente un dispositif de transmission de données caractérisé en ce que chaque dispositif de gestion comporte une bascule T, présentant une sortie non-inverseuse, une sortie inverseuse et une entrée d'horloge, lesdites sorties commutant à chaque front montant du signal reçu sur l'entrée d'horloge, bascule T dont la sortie non-inverseuse est reliée à l'entrée de commande du dispositif de contrôle pilotant l'autre ligne, bascule T dont la sortie inverseuse est destinée à fournir un signal de désactivation au dispositif de gestion dédié à l'autre ligne, bascule T dont les sorties inverseuse et non-inverseuse sont initialisées respectivement au niveau logique correspondant à l'état de repos des lignes et au niveau logique inverse lors de la mise en fonctionnement du dispositif de transmission, en ce que chaque dispositif de gestion comporte en outre un interrupteur dont l'ouverture est commandée par au moins un signal de désactivation issu d'un dispositif de gestion dédié à une autre ligne, interrupteur dont une première borne est reliée à la ligne à laquelle est dédié le dispositif de gestion et dont une deuxième borne est connectée à l'entrée d'une cellule à retard, cellule à retard dont la sortie est reliée à une entrée d'une porte logique OU-EXCLUSIF deux entrées dont l'autre entrée est connectée à la deuxième borne de l'interrupteur, porte logique OU-EXCLUSIF dont la sortie est reliée à l'entrée d'horloge de la bascule T.

Ces deux variantes de l'invention sont capables de transmettre indifféremment des niveaux logiques 1 ou 0, le passage d'un mode à l'autre se faisant en reprogrammant les conditions d'initialisation des bascules T.

L'invention sera mieux comprise à l'aide de la description suivante de quelques modes de réalisation, faite à titre d'exemple et en regard des dessins annexés, dans lesquels :
- la figure 1 est un schéma fonctionnel partiel d'un dispositif de transmission conforme à l'invention,
- la figure 2 est un schéma fonctionnel partiel d'un dispositif de contrôle inclus dans un mode de réalisation particulier de l'invention,
- la figure 3 est un schéma fonctionnel partiel d'un dispositif de contrôle inclus dans un autre mode de réalisation particulier de l'invention,
- la figure 4 est schéma fonctionnel partiel d'un dispositif de transmission selon un mode de réalisation de l'invention,
- la figure 5 est un ensemble de chronogrammes représentant l'évolution dans le temps de signaux présents dans un dispositif de transmission selon ce mode de réalisation de l'invention,
- la figure 6 est schéma fonctionnel partiel d'un dispositif de transmission selon un mode de réalisation d'une variante de l'invention, et
- la figure 7 est un ensemble de chronogrammes représentant l'évolution dans le temps de signaux présents dans ce mode de réalisation d'une variante de l'invention.

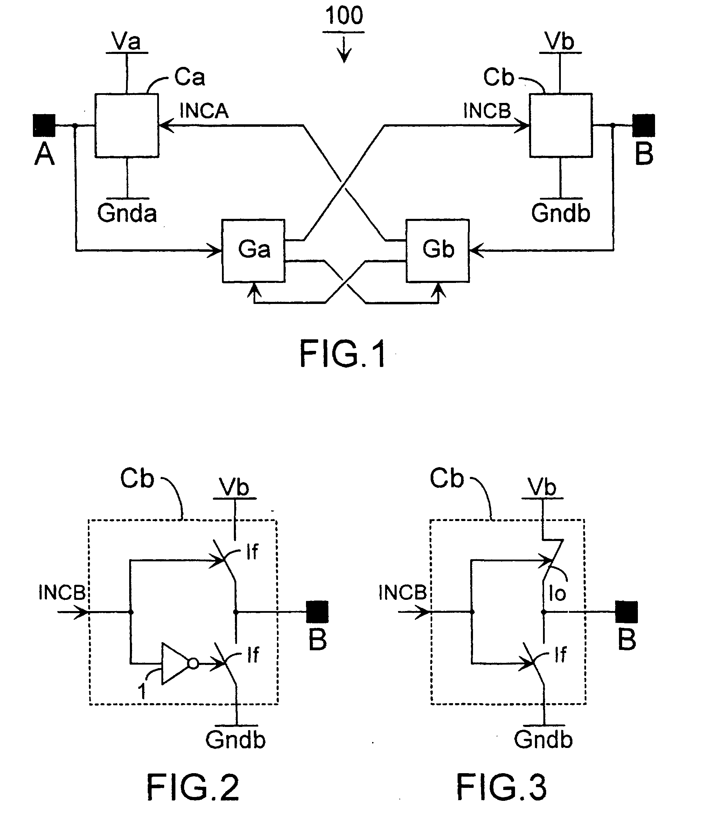

La figure 1 présente un dispositif de transmission de données comprenant deux lignes A et B au travers desquelles circulent des données numériques dont les niveaux logiques sont définis, pour chaque ligne, A ou B, par des potentiels pris à des bornes positive, Va ou Vb, et négative, Gnda et Gndb, d'alimentation de ladite ligne, A ou B, et un module d'interface 100 effectuant la liaison entre les lignes A et B. Le module d'interface 100 comporte d'une part deux dispositifs dits de gestion, Ga et Gb, chacun étant dédié à une seule ligne de transmission, A ou B. Le module d'interface 100 comporte d'autre part deux dispositifs dits de contrôle de potentiel Ca et Cb, chacun pilotant une seule ligne de transmission, A ou B. Chaque dispositif de contrôle, Ca ou Cb est muni d'une entrée dite entrée de commande, INCA ou INCB, et de moyens pour reproduire, sur la ligne qu'il pilote, A ou B, une donnée définie par un signal reçu sur ladite entrée de commande, INCA ou INCB. Chaque dispositif de gestion, Ga ou Gb, est muni de moyens pour lui permettre de se faire désactiver par l'autre dispositif de gestion, Gb ou Ga. Chaque dispositif de gestion, Ga et Gb, est muni en outre de moyens pour détecter la présence, sur la ligne à laquelle il est dédié, A ou B, d'une donnée à transmettre à l'autre ligne, respectivement B ou A. Chaque dispositif de gestion, Ga ou Gb est muni, de plus, de moyens pour commander la désactivation de l'autre dispositif de gestion, Gb ou Ga, dédié à l'autre ligne, B ou A. Chaque dispositif de gestion, Ga ou Gb est muni enfin de moyens pour définir au dispositif de contrôle, Cb ou Ca, du potentiel de ladite autre ligne, B ou A, la donnée qu'il doit reproduire.

La figure 2 présente un dispositif de contrôle Cb inclus dans un mode de réalisation particulier de l'invention. Il comporte un premier interrupteur If placé entre la ligne B pilotée par le dispositif de contrôle et la borne positive d'alimentation Vb de ladite ligne B, et un deuxième interrupteur If placé entre la ligne B et la borne négative d'alimentation Gndb de ladite ligne, le premier interrupteur If étant commandé par le signal reçu sur l'entrée de commande INCB du dispositif de contrôle Cb, le deuxième interrupteur If étant commandé par l'inverse dudit signal INCB, inverse obtenu au moyen de l'inverseur 1. Les deux interrupteurs If ont une impédance interne faible par rapport à celle de la ligne B pendant une période durant laquelle ils commutent et une impédance interne élevée par rapport à celle de ladite ligne B pendant une période durant laquelle ils sont maintenus en position. Les deux interrupteurs If peuvent être réalisés sur la base de transistors de même polarité, des transistors bipolaires NPN par exemple. Si le signal reçu sur l'entrée de commande INCB est au niveau logique 1, le potentiel de la ligne B sera imposé à Vb, et donc au niveau logique haut propre à la ligne B. Si le signal reçu sur l'entrée de commande INCB est au niveau logique 0, le potentiel de la ligne B sera imposé à Gndb, et donc au niveau logique bas propre à la ligne B.

La figure 3 présente un dispositif de contrôle Cb inclus dans un mode de réalisation particulier de l'invention. Il comporte un premier interrupteur Io placé entre la ligne B pilotée par le dispositif de contrôle Cb et la borne positive d'alimentation Vb de ladite ligne B, et un deuxième interrupteur If placé entre la ligne B et la borne négative d'alimentation Gndb de ladite ligne B. Les deux interrupteurs Io et If ont une impédance interne faible par rapport à celle de la ligne B pendant une période durant laquelle ils commutent et une impédance interne élevée par rapport à celle de ladite ligne B pendant une période durant laquelle ils sont maintenus en position. Les interrupteurs Io et If ont des entrées de commande de polarités opposées, et peuvent être réalisés sur la base respectivement d'un transistor PMOS et d'un transistor NMOS par exemple. Ils sont commandés par le signal INCB reçu sur l'entrée de commande du dispositif de contrôle. Si le signal reçu sur l'entrée de commande INCB est au niveau logique 0, le potentiel de la ligne B sera imposé à Vb, et donc au niveau logique haut propre à la ligne B. Si le signal reçu sur l'entrée de commande INCB est au niveau logique 1, le potentiel de la ligne B sera imposé à Gndb, et donc au niveau logique bas propre à la ligne B.

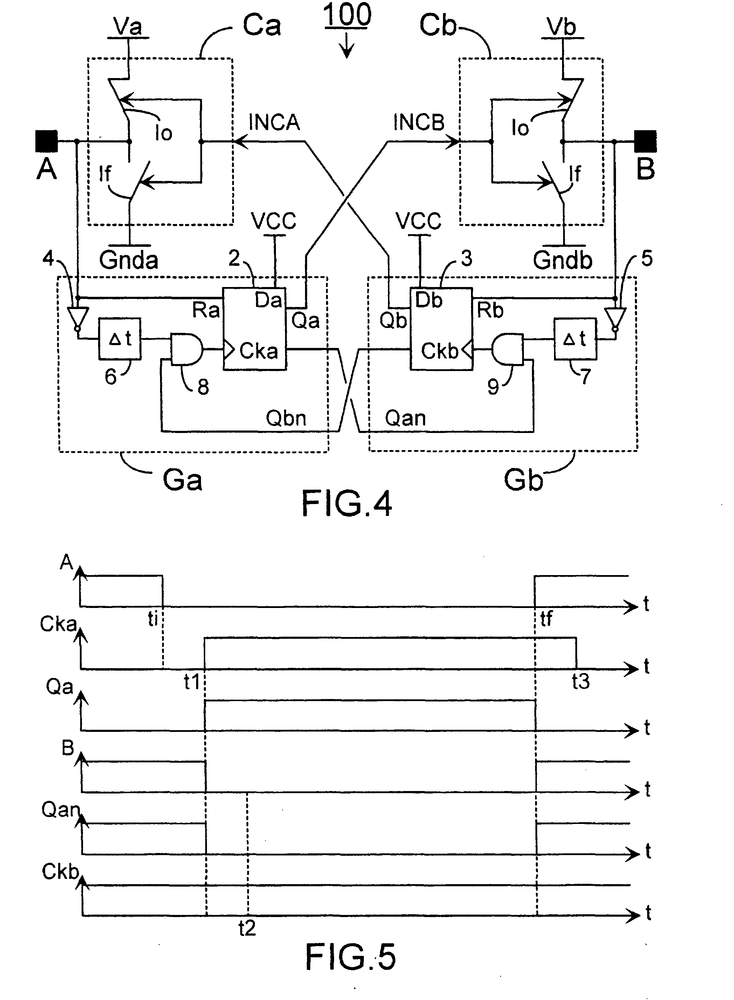

La figure 4 présente un dispositif de transmission selon un mode de réalisation de l'invention, dans lequel chaque dispositif de contrôle, Ca ou Cb, comporte un premier interrupteur Io placé entre la ligne, A ou B, pilotée par le dispositif de contrôle et la borne positive d'alimentation, Va ou Vb, de ladite ligne, A ou B, et un interrupteur If placé entre la ligne, A ou B, et la borne négative d'alimentation, Gnda ou Gndb, de ladite ligne. Les interrupteurs Io et If ont une impédance interne faible par rapport à celle de la ligne, A ou B, pendant la période durant laquelle ils commutent et une impédance interne élevée par rapport à celle de ladite ligne pendant la période durant laquelle ils sont maintenus en position. Les deux interrupteurs Io et If ont des entrées de commande de polarités opposées. Ils sont commandés par le signal, INCA ou INCB, reçu sur l'entrée de commande du dispositif de contrôle, Ca ou Cb. Dans ce mode de réalisation de l'invention, chaque dispositif de gestion, Ga ou Gb, comporte une bascule D, 2 ou 3, dont une entrée de données, Da ou Db, est reliée à un potentiel VCC correspondant au niveau logique 1 au sein du module d'interface 100, bascule D, 2 ou 3, dont une sortie non-inverseuse, Qa ou Qb, est reliée à l'entrée de commande, INCB ou INCA, du dispositif de contrôle, Cb ou Ca, pilotant l'autre ligne, B ou A, bascule D, 2 ou 3, dont une sortie inverseuse, Qan ou Qbn, fournit un signal de désactivation à au moins un dispositif de gestion, Gb ou Ga, dédié à une autre ligne, B ou A, bascule D, 2 ou 3, dont une entrée de remise à zéro, Ra ou Rb, est reliée à la ligne, A ou B, à laquelle le dispositif de gestion, Ga ou Gb, est dédié. Le dispositif de gestion, Ga ou Gb, comporte en outre un inverseur, respectivement 4 ou 5, une cellule à retard, respectivement 6 ou 7, et une porte logique ET, respectivement 8 ou 9, la ligne, A ou B, à laquelle le dispositif de gestion, Ga ou Gb, est dédié étant reliée à l'entrée de l'inverseur, 4 ou 5, inverseur dont la sortie est connectée à l'entrée de la cellule à retard, 6 ou 7, cellule à retard dont la sortie est reliée à une entrée de la porte logique ET, 8 ou 9, dont l'autre entrée reçoit le signal de désactivation, Qbn ou Qan, issu du dispositif de gestion, Gb ou Ga, dédié à l'autre ligne, B ou A, porte logique ET, 8 ou 9, dont la sortie est reliée à une entrée d'horloge, Cka ou Ckb, de la bascule D 2 ou 3.

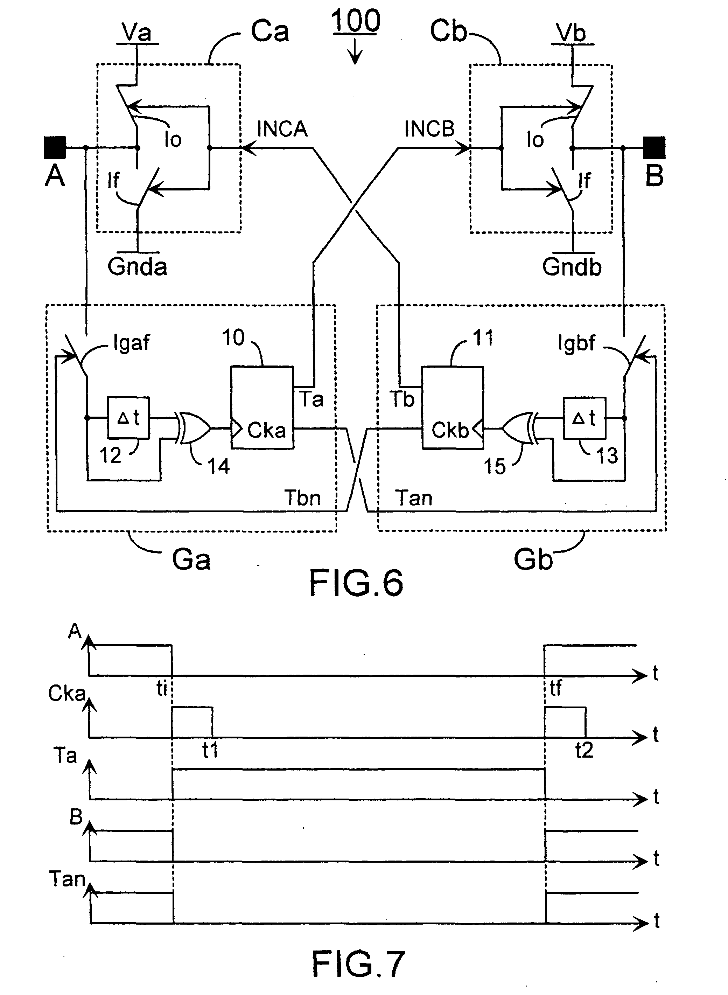

La figure 5 représente l'évolution dans le temps de signaux présents dans un dispositif de transmission selon ce mode de réalisation de l'invention : au repos, les deux lignes A et B sont au niveau logique 1. Les entrées Ra et Rb de remise à zéro des bascules D, 2 et 3, sont donc au niveau logique 1, par conséquent, les sorties non-inverseuses Qa et Qb des bascules D 2 et 3 sont au niveau logique 0 et les sorties inverseuses Qan et Qbn sont au niveau logique 1. Les lignes A et B peuvent passer au niveau logique 0, les interrupteurs Io ayant pendant leur période de maintien en position, une impédance interne faible devant celle des lignes. Si, par exemple, ce basculement se produit sur la ligne A à l'instant ti, à l'instant t1, tel que t1-ti=Δt, la sortie de la cellule à retard 6 restitue la sortie de l'inverseur 4 qui a inversé le niveau logique 0 présent sur A. Cka passe donc au niveau logique 1, ce front montant provoquant la mémorisation du niveau logique 1 dans la bascule D 2. La sortie Qan passe à 0, imposant ainsi un niveau logique 0 sur une entrée de la porte ET 9, et donc également sur l'entrée d'horloge Ckb de la bascule D 3, ce qui assure la désactivation du dispositif de gestion Gb. Simultanément, la sortie Qa passe à 1 et commande la commutation des interrupteurs Io et If. L'impédance interne de ces derniers étant faible devant celle de la ligne B, If impose sur la ligne B le potentiel Gndb, correspondant au niveau logique 0. Ce basculement ne fera sentir son influence à l'entrée de la porte ET 9 qu'à l'instant t2, du fait du passage du signal au travers de la cellule à retard 7, c'est-à-dire au bout d'un temps Δt après que la bascule 3 ait été désactivée. Le passage au niveau logique 0 de la ligne B n'est donc pas pris en compte. A l'instant tf, la ligne A revient au niveau 1, transmettant ainsi un niveau logique 1 à l'entrée de remise à zéro Ra de la bascule D 2. Cette entrée agissant de manière asynchrone, la sortie Qa passe au niveau logique 0, provoquant ainsi la commutation des interrupteurs Io et If du dispositif de contrôle Cb. Ceux-ci ayant une impédance interne faible par rapport à celle de la ligne B, pilotée par le dispositif de contrôle Cb pendant la période durant laquelle ils commutent, Io impose sur la ligne B le niveau logique 1. Simultanément, la sortie Qan repasse au niveau logique 1, imposant ainsi un niveau logique 1 sur une entrée de la porte ET 9, ce qui assure la réactivation du dispositif de gestion Gb. A l'instant t3, du fait de la cellule à retard 6, le signal d'horloge Cka de la bascule D 2 bascule enfin, sans aucun effet sur l'état de la bascule D 2. L'état de repos est alors à nouveau atteint. Le dispositif étant parfaitement symétrique, la description du cas de figure évoqué ci-dessus est aisément transposable au cas ou c'est B, et non pas A, qui présente la donnée à transmettre.

La figure 6 présente un dispositif de transmission selon une variante de l'invention, dans lequel chaque dispositif de contrôle, Ca ou Cb, comporte un premier interrupteur Io placé entre la ligne, A ou B, pilotée par le dispositif de contrôle et la borne positive d'alimentation, Va ou Vb, de ladite ligne, A ou B, et un interrupteur If placé entre la ligne, A ou B, et la borne négative d'alimentation, Gnda ou Gndb, de ladite ligne. Les interrupteurs Io et If ont une impédance interne faible par rapport à celle de la ligne, A ou B, pendant la période durant laquelle ils commutent et une impédance interne élevée par rapport à celle de ladite ligne pendant la période durant laquelle ils sont maintenus en position. Les deux interrupteurs Io et If ont des entrées de commande de polarités opposées. Ils sont commandés par le signal, INCA ou INCB, reçu sur l'entrée de commande du dispositif de contrôle, Ca ou Cb. Dans ce mode de réalisation d'une variante de l'invention, chaque dispositif de gestion, Ca ou Gb, comporte une bascule T, 10 ou 11, présentant une sortie non-inverseuse, Ta ou Tb, une sortie inverseuse, Tan ou Tbn, et une entrée d'horloge, Cka ou Ckb, lesdites sorties commutant à chaque front montant du signal reçu sur l'entrée d'horloge, Cka ou Ckb, bascule T, 10 ou 11, dont la sortie non-inverseuse, Ta ou Tb, est reliée à l'entrée de commande, INCA ou INCB, du dispositif de contrôle, Cb ou Ca, pilotant l'autre ligne, B ou A, bascule T, 10 ou 11, dont la sortie inverseuse, Tan ou Tbn, fournit un signal de désactivation à l'autre dispositif de gestion, Gb ou Ga, dédié à l'autre ligne, B ou A, bascule T, 10 ou 11, dont les sorties inverseuses, Tan ou Tbn, et non-inverseuse, Ta ou Tb, sont initialisées respectivement au niveau logique correspondant à l'état de repos des lignes A et B et au niveau logique inverse lors de la mise en fonctionnement du dispositif de transmission. Le dispositif de gestion, Ga ou Gb, comporte en outre un interrupteur, Igaf ou Igbf, dont l'ouverture est commandée par le signal de désactivation, Tbn ou Tan, issu du dispositif de gestion, Gb ou Ga, dédié à l'autre ligne, B ou A, interrupteur, Igaf ou Igbf, dont une première borne est reliée à la ligne, A ou B, à laquelle est dédié le dispositif de gestion, Ga ou Gb, et dont une deuxième borne est connectée à l'entrée d'une cellule à retard, 12 ou 13, cellule à retard dont la sortie est reliée à une entrée d'une porte logique OU-EXCLUSIF deux entrées, 14 ou 15, dont l'autre entrée est connectée à la deuxième borne de l'interrupteur, Igaf ou Igbf, porte logique OU-EXCLUSIF, 14 ou 15, dont la sortie est reliée à l'entrée d'horloge, Cka ou Ckb, de la bascule T, 10 ou 11.

La figure 7 représente l'évolution dans le temps de signaux présents dans un dispositif de transmission selon cette variante de l'invention : au repos, les deux lignes A et B sont au niveau logique 1. Après initialisation, les sorties non-inverseuses Ta et Tb des bascules T 10 et 11 sont au niveau logique 0 et les sorties inverseuses Tan et Tbn sont au niveau logique 1. Les interrupteurs Igaf et Igbf sont donc fermés. Les lignes A et B peuvent passer au niveau logique 0, les interrupteurs Io et If ayant, pendant leur période de maintien en position, une impédance interne faible devant celle des lignes. Si, par exemple, ce basculement se produit sur la ligne A à l'instant ti, jusqu'à l'instant t1, défini par : t1-ti=Δt, la sortie de la cellule à retard restitue le niveau logique 1 initialement présent sur A. Cka passe donc au niveau logique 1 à l'instant ti, ce front montant provoquant le basculement des sorties de la bascule T 10. La sortie Tan passe à 0, provoquant ainsi l'ouverture de l'interrupteur Igbf, ce qui assure la désactivation du dispositif de gestion Gb. Simultanément, la sortie Ta passe à 1 et commande la commutation des interrupteurs Io et If. L'impédance interne de ce dernier étant faible devant celle de la ligne B, If impose sur la ligne B le potentiel Gndb, correspondant au niveau logique 0. A l'instant tf, la ligne A revient au niveau 1. Jusqu'à l'instant t2, défini par : t2-tf=Δt, la sortie de la cellule à retard 12 restitue le niveau logique 0 précédemment présent sur A. Cka passe donc au niveau logique 1 à l'instant tf, ce front montant provoquant le basculement des sorties de la bascule T 10. La sortie Tan passe à 1, provoquant ainsi la fermeture de l'interrupteur Igbf, ce qui assure la réactivation du dispositif de gestion Gb. Simultanément, la sortie Ta passe à 0 et commande la commutation des interrupteurs Io et If. Ceux-ci ayant une impédance interne faible par rapport à celle de la ligne B pilotée par le dispositif de contrôle Cb pendant la période durant laquelle ils commutent, Io impose sur la ligne B le niveau logique 1. A l'instant t3, du fait de la cellule à retard 6, le signal d'horloge Cka de la bascule D 2 bascule enfin, sans aucun effet sur l'état de la bascule D 2. L'état de repos est alors à nouveau atteint. Le dispositif étant parfaitement symétrique, la description du cas de figure évoqué ci-dessus est aisément transposable au cas ou c'est B, et non pas A, qui présente la donnée à transmettre.

## Revendications

1. Dispositif de transmission de données comprenant deux lignes au travers desquelles circulent des données numériques, le dispositif de transmission comprenant un module d'interface (100) effectuant la liaison entre les lignes (A, B) pour transmettre les données numériques d'une ligne à l'autre,
. le module d'interface (100) comportant deux dispositifs de gestion (Ga, Gb), chacun étant dédié à une seule ligne,
. chaque dispositif de gestion, étant muni de moyens pour détecter la présence sur la ligne à laquelle il est dédié d'une donnée numérique à transmettre à l'autre ligne, muni aussi de moyens pour générer un signal numérique de commande à partir de ladite donnée numérique à transmettre, muni aussi de moyens lui permettant de se faire désactiver par l'autre dispositif de gestion la génération dudit signal numérique de commande, et muni enfin de moyens pour commander la désactivation de la génération du signal numérique de commande de l'autre dispositif de gestion dédié à l'autre ligne, **caractérisé en ce que** le module d'interface comporte aussi:
. deux dispositifs de contrôle de potentiel (Ca, Cb), chacun pilotant une seule ligne (A, B) pour transmettre une donnée numérique de l'autre ligne, les lignes (A, B) au travers desquelles circulent les données numériques ayant des caractéristiques électriques différentes telles que les niveaux logiques hauts (Va, Vb) n'ont pas la même valeur de potentiel d'une ligne à l'autre, et que les niveaux logiques bas (Gnda, Gndb) n'ont pas la même valeur de potentiel d'une ligne à l'autre,
. chaque dispositif de contrôle de potentiel (Ca, Cb) étant muni de moyens pour reproduire, sur la ligne (A, B) qu'il pilote, la donnée numérique de l'autre ligne (B, A) à transmettre, à partir du signal numérique de commande généré par le dispositif de gestion (Gb, Ga) dédié à l'autre ligne (B, A), ledit signal numérique de commande étant appliqué sur l'entrée de commande (INCA, INCB) dudit dispositif de contrôle (Ca, Cb), la valeur des niveaux logiques de la donnée numérique ainsi reproduite étant ainsi adaptée aux caractéristiques électriques de la ligne où elle est transmise,
. chaque dispositif de contrôle (Ca, Cb) comportant un premier interrupteur placé entre la ligne (A, B) pilotée par le dispositif de contrôle (Ca, Cb) et la borne positive d'alimentation (Va, Vb) de ladite ligne, et un deuxième interrupteur placé entre la ligne (A,B) pilotée par le dispositif de contrôle (Ca, Cb) et la borne négative d'alimentation (Gnda, Gndb) de ladite ligne (A, B), le premier interrupteur étant commandé par le signal reçu sur l'entrée de commande (INCA, INCB) du dispositif de contrôle (Ca, Cb), le deuxième interrupteur étant commandé par l'inverse dudit signal au moyen d'un inverseur (1), les deux interrupteurs ayant une impédance interne faible par rapport à celle de la ligne (A, B) pilotée par le dispositif de contrôle (Ca, Cb) pendant une période durant laquelle ils commutent et une impédance interne élevée par rapport à celle de ladite ligne (A, B) pendant une période durant laquelle ils sont maintenus en position,
. chaque dispositif de gestion (Ga, Gb) comportant une bascule D (2, 3), dont l'entrée de données (Da, Db) est reliée à un potentiel (VCC) correspondant au niveau logique 1, bascule D (2, 3) dont la sortie non-inverseuse (Qa, Qb) est reliée à une entrée de commande (INCB, INCA) du dispositif de contrôle (Cb, Ca) pilotant l'autre ligne (B, A), bascule D (2, 3) dont la sortie inverseuse (Qan, Qbn) est destinée à fournir un signal de désactivation au dispositif de gestion (Gb, Ga) dédié à l'autre ligne (B, A), bascule D (2, 3) dont une entrée de remise à zéro (Ra, Rb) est reliée à la ligne (A, B) à laquelle le dispositif de gestion (Ga, Gb) est dédié, dispositif de gestion (Ga, Gb) comportant en outre un inverseur (4, 5), une cellule à retard (6, 7) et une porte logique ET (8, 9), la ligne (A, B) à laquelle le dispositif de gestion (Ga, Gb) est dédié étant reliée à l'entrée de l'inverseur (4, 5), inverseur (4, 5) dont la sortie est connectée à l'entrée de la cellule à retard (6, 7), cellule à retard (6, 7) dont la sortie est reliée à une entrée de la porte logique ET dont une autre entrée est destinée à recevoir un signal de désactivation issu du dispositif de gestion (Gb, Ga) dédié à l'autre ligne (B, A), porte logique ET (8, 9) dont la sortie est reliée à une entrée d'horloge (Cka, Ckb) de la bascule D (2, 3).

2. Dispositif de transmission de données comprenant deux lignes au travers desquelles circulent des données numériques, le dispositif de transmission comprenant un module d'interface (100) effectuant la liaison entre les lignes (A, B) pour transmettre les données numériques d'une ligne à l'autre,
. le module d'interface (100) comportant deux dispositifs de gestion (Ga, Gb), chacun étant dédié à une seule ligne,
. chaque dispositif de gestion, étant muni de moyens pour détecter la présence sur la ligne à laquelle il est dédié d'une donnée numérique à transmettre à l'autre ligne, muni aussi de moyens pour générer un signal numérique de commande à partir de ladite donnée numérique à transmettre, muni aussi de moyens lui permettant de se faire désactiver par l'autre dispositif de gestion la génération dudit signal numérique de commande, et muni enfin de moyens pour commander la désactivation de la génération du signal numérique de commande de l'autre dispositif de gestion dédié à l'autre ligne, **caractérisé en ce que** le module d'interface comporte aussi:
. deux dispositifs de contrôle de potentiel (Ca, Cb), chacun pilotant une seule ligne (A, B) pour transmettre une donnée numérique de l'autre ligne, les lignes (A, B) au travers desquelles circulent les données numériques ayant des caractéristiques électriques différentes telles que les niveaux logiques hauts (Va, Vb) n'ont pas la même valeur de potentiel d'une ligne à l'autre, et que les niveaux logiques bas (Gnda, Gndb) n'ont pas la même valeur de potentiel d'une ligne à l'autre,
. chaque dispositif de contrôle de potentiel (Ca, Cb) étant muni de moyens pour reproduire, sur la ligne (A, B) qu'il pilote, la donnée numérique de l'autre ligne (B, A) à transmettre, à partir du signal numérique de commande généré par le dispositif de gestion (Gb, Ga) dédié à l'autre ligne (B, A), ledit signal numérique de commande étant appliqué sur l'entrée de commande (INCA, INCB) dudit dispositif de contrôle (Ca, Cb), la valeur des niveaux logiques de la donnée numérique ainsi reproduite étant ainsi adaptée aux caractéristiques électriques de la ligne où elle est transmise,
. chaque dispositif de contrôle (Ca, Cb) comportant un premier interrupteur placé entre la ligne (A, B) pilotée par le dispositif de contrôle (Ca, Cb) et la borne positive d'alimentation (Va, vb) de ladite ligne, et un deuxième interrupteur placé entre la ligne (A,B) pilotée par le dispositif de contrôle (Ca, Cb) et la borne négative d'alimentation (Gnda, Gndb) de ladite ligne (A,B), le premier interrupteur étant commandé par le signal reçu sur l'entrée de commande (INCA, INCB) du dispositif de contrôle (Ca, Cb), le deuxième interrupteur étant commandé par l'inverse dudit signal au moyen d'un inverseur (1), les deux interrupteurs ayant une impédance interne faible par rapport à celle de la ligne (A, B) pilotée par le dispositif de contrôle (Ca, Cb) pendant une période durant laquelle ils commutent et une impédance interne élevée par rapport à celle de ladite ligne (A, B) pendant une période durant laquelle ils sont maintenus en position,
. chaque dispositif de gestion (Ga, Gb) comportant une bascule T (10, 11) présentant une sortie inverseuse (Tan, Tbn) et une entrée d'horloge (Cka, Ckb), ladite sortie inverseuse commutant à chaque front montant du signal reçu sur l'entrée d'horloge (Cka, Ckb), bascule T (10, 11) dont la sortie non-inverseuse (Ta, Tb) est reliée à l'entrée de commande (INCB, INCA) du dispositif de contrôle (Cb, Ca) pilotant l'autre ligne (B, A), bascule T (10, 11) dont la sortie inverseuse (Tan, Tbn) est destinée à fournir un signal de désactivation au dispositif de gestion (Gb, Ga) dédié à l'autre ligne (B, A), bascule T (10, 11) dont la sortie inverseuse (Tan, Tbn) est initialisée au niveau logique correspondant à l'état de repos des lignes lors de la mise en fonctionnement du dispositif de transmission, **en ce que** chaque dispositif de gestion (Ga, Gb) comporte en outre un interrupteur (Igaf, Igbf) dont l'ouverture est commandée par le signal de désactivation issu du dispositif de gestion (Gb, Ga) dédié à l'autre ligne (B, A), interrupteur (Igaf, Igbf) dont une première borne est reliée à la ligne (A, B) à laquelle est dédié le dispositif de gestion (Ga, Gb) et dont une deuxième borne est connectée à l'entrée d'une cellule à retard (12, 13), cellule à retard (12, 13) dont la sortie est reliée à une première entrée d'une porte logique OU-EXCLUSIF (14, 15) à deux entrées, porte logique (14, 15) dont la deuxième entrée est connectée à ladite deuxième borne de l'interrupteur (Igaf, Igbf), porte logique (14, 15) dont la sortie (Tan, Tbn) est reliée à l'entrée d'horloge (Cka, Ckb) de la bascule T (10, 11).

3. Dispositif de transmission de données comprenant deux lignes au travers desquelles circulent des données numériques, le dispositif de transmission comprenant un module d'interface (100) effectuant la liaison entre les lignes (A, B) pour transmettre les données numériques d'une ligne à l'autre,
. le module d'interface (100) comportant deux dispositifs de gestion (Ga, Gb), chacun étant dédié à une seule ligne,
. chaque dispositif de gestion, étant muni de moyens pour détecter la présence sur la ligne à laquelle il est dédié d'une donnée numérique à transmettre à l'autre ligne, muni aussi de moyens pour générer un signal numérique de commande à partir de ladite donnée numérique à transmettre, muni aussi de moyens lui permettant de se faire désactiver par l'autre dispositif de gestion la génération dudit signal numérique de commande, et muni enfin de moyens pour commander la désactivation de la génération du signal numérique de commande de l'autre dispositif de gestion dédié à l'autre ligne, **caractérisé en ce que** le module d'interface comporte aussi:
. deux dispositifs de contrôle de potentiel (Ca, Cb), chacun pilotant une seule ligne (A, B) pour transmettre une donnée numérique de l'autre ligne, les lignes (A, B) au travers desquelles circulent les données numériques ayant des caractéristiques électriques différentes telles que les niveaux logiques hauts (Va, Vb) n'ont pas la même valeur de potentiel d'une ligne à l'autre, et que les niveaux logiques bas (Gnda, Gndb) n'ont pas la même valeur de potentiel d'une ligne à l'autre,
. chaque dispositif de contrôle de potentiel (Ca, Cb) étant muni de moyens pour reproduire, sur la ligne (A, B) qu'il pilote, la donnée numérique de l'autre ligne (B, A) à transmettre, à partir du signal numérique de commande généré par le dispositif de gestion (Gb, Ga) dédié à l'autre ligne (B, A), ledit signal numérique de commande étant appliqué sur l'entrée de commande (INCA, INCB) dudit dispositif de contrôle (Ca, Cb), la valeur des niveaux logiques de la donnée numérique ainsi reproduite étant ainsi adaptée aux caractéristiques électriques de la ligne où elle est transmise,
. chaque dispositif de contrôle (Ca, Cb) comportant un premier interrupteur (Io) placé entre la ligne (A, B) pilotée par le dispositif de contrôle (Ca, Cb) et la borne positive d'alimentation (Va, Vb) de ladite ligne (A, B), et un deuxième interrupteur (If) placé entre la ligne (A, B) pilotée par le dispositif de contrôle (Ca, Cb) et la borne négative d'alimentation (Gnda, Gndb) de ladite ligne (A, B), les deux interrupteurs ayant une impédance interne faible par rapport à celle de la ligne pilotée par le dispositif de contrôle pendant une période durant laquelle ils commutent et une impédance interne élevée par rapport à celle de ladite ligne pendant une période durant laquelle ils sont maintenus en position, les deux interrupteurs (Io, If) ayant des entrées de commande de polarités opposées et étant commandés par le signal reçu sur l'entrée de commande (INCA, INCB) du dispositif de contrôle (Ca, Cb),
. chaque dispositif de gestion (Ga, Gb) comportant une bascule D (2, 3), dont l'entrée de données (Da, Db) est reliée à un potentiel (VCC) correspondant au niveau logique 1, bascule D (2, 3) dont une sortie non-inverseuse (Qa, Qb) est reliée à une entrée de commande (INCB, INCA) du dispositif de contrôle (Cb, Ca) pilotant l'autre ligne (B, A), bascule D (2, 3) dont une sortie inverseuse (Qan, Qbn) est destinée à fournir un signal de désactivation au dispositif de gestion (Gb, Ga) dédié à l'autre ligne (B, A), bascule D (2, 3) dont une entrée de remise à zéro (Ra, Rb) est reliée à la ligne (A, B) à laquelle le dispositif de gestion (Ga, Gb) est dédié, dispositif de gestion (Ga, Gb) comportant en outre un inverseur (4, 5), une cellule à retard (6, 7) et une porte logique ET (8, 9), la ligne (A, B) à laquelle le dispositif de gestion (Ga, Gb) est dédié étant reliée à l'entrée de l'inverseur (4, 5), inverseur (4, 5) dont la sortie est connectée à l'entrée de la cellule à retard (6,7), cellule à retard (6,7) dont la sortie est reliée à une entrée de la porte logique ET (8, 9) dont une autre entrée est destinée à recevoir le signal de désactivation issu du dispositif de gestion (Gb, Ga) dédié à l'autre ligne (B, A), porte logique ET (8, 9) dont la sortie est reliée à une entrée d'horloge (Cka, Ckb) de la bascule D (2, 3).

4. Dispositif de transmission de données comprenant deux lignes au travers desquelles circulent des données numériques, le dispositif de transmission comprenant un module d'interface (100) effectuant la liaison entre les lignes (A, B) pour transmettre les données numériques d'une ligne à l'autre,
. le module d'interface (100) comportant deux dispositifs de gestion (Ga, Gb), chacun étant dédié à une seule ligne,
. chaque dispositif de gestion, étant muni de moyens pour détecter la présence sur la ligne à laquelle il est dédié d'une donnée numérique à transmettre à l'autre ligne, muni aussi de moyens pour générer un signal numérique de commande à partir de ladite donnée numérique à transmettre, muni aussi de moyens lui permettant de se faire désactiver par l'autre dispositif de gestion la génération dudit signal numérique de commande, et muni enfin de moyens pour commander la désactivation de la génération du signal numérique de commande de l'autre dispositif de gestion dédié à l'autre ligne, **caractérisé en ce que** le module d'interface comporte aussi:
. deux dispositifs de contrôle de potentiel (Ca, Cb), chacun pilotant une seule ligne (A, B) pour transmettre une donnée numérique de l'autre ligne, les lignes (A, B) au travers desquelles circulent les données numériques ayant des caractéristiques électriques différentes telles que les niveaux logiques hauts (Va, Vb) n'ont pas la même valeur de potentiel d'une ligne à l'autre, et que les niveaux logiques bas (Gnda, Gndb) n'ont pas la même valeur de potentiel d'une ligne à l'autre,
. chaque dispositif de contrôle de potentiel (Ca, Cb) étant muni de moyens pour reproduire, sur la ligne (A, B) qu'il pilote, la donnée numérique de l'autre ligne (B, A) à transmettre, à partir du signal numérique de commande généré par le dispositif de gestion (Gb, Ga) dédié à l'autre ligne (B, A), ledit signal numérique de commande étant appliqué sur l'entrée de commande (INCA, INCB) dudit dispositif de contrôle (Ca, Cb), la valeur des niveaux logiques de la donnée numérique ainsi reproduite étant ainsi adaptée aux caractéristiques électriques de la ligne où elle est transmise,
. chaque dispositif de contrôle (Ca, Cb) comportant un premier interrupteur (Io) placé entre la ligne (A, B) pilotée par le dispositif de contrôle (Ca, Cb) et la borne positive d'alimentation (Va, Vb) de ladite ligne (A, B), et un deuxième interrupteur (If) placé entre la ligne (A, B) pilotée par le dispositif de contrôle (Ca, Cb) et la borne négative d'alimentation (Gnda, Gndb) de ladite ligne (A, B), les deux interrupteurs ayant une impédance interne faible par rapport à celle de la ligne pilotée par le dispositif de contrôle pendant une période durant laquelle ils commutent et une impédance interne élevée par rapport à celle de ladite ligne pendant une période durant laquelle ils sont maintenus en position, les deux interrupteurs (Io, If) ayant des entrées de commande de polarités opposées et étant commandés par le signal reçu sur l'entrée de commande (INCA, INCB) du dispositif de contrôle (Ca, Cb),
. chaque dispositif de gestion (Ga, Gb) comportant une bascule T (10, 11) présentant une sortie non-inverseuse (Ta, Tb), une sortie inverseuse (Tan, Tbn) et une entrée d'horloge (Cka, Ckb), lesdites sorties commutant à chaque front montant du signal reçu sur l'entrée d'horloge (Cka, Ckb), bascule T (10, 11) dont la sortie non-inverseuse (Ta, Tb) est reliée à l'entrée de commande (INCB, INCA) du dispositif de contrôle (Cb, Ca) pilotant l'autre ligne (B, A), bascule T (10, 11) dont la sortie inverseuse (Tan, Tbn) est destinée à fournir un signal de désactivation au dispositif de gestion (Gb, Ga) dédié à l'autre ligne (B, A), bascule T (10, 11) dont les sorties inverseuse (Tan, Tbn) et non-inverseuse (Ta, Tb) sont initialisées respectivement au niveau logique correspondant à l'état de repos des lignes et au niveau logique inverse lors de la mise en fonctionnement du dispositif de transmission, **en ce que** chaque dispositif de gestion (Ga, Gb) comporte en outre un interrupteur (Igaf, Igbf) dont l'ouverture est commandée par le signal de désactivation issu du dispositif de gestion (Gb, Ga) dédié à l'autre ligne (B, A), interrupteur (Igaf, Igbf) dont une première borne est reliée à la ligne (A, B) à laquelle est dédié le dispositif de gestion (Ga, Gb) et dont une deuxième borne est connectée à l'entrée d'une cellule à retard (12, 13), cellule à retard (12, 13) dont la sortie est reliée à une première entrée d'une porte logique OU-EXCLUSIF (14, 15) à deux entrées, porte logique (14, 15) dont la deuxième entrée est connectée à ladite deuxième borne de l'interrupteur (Igaf, Igbf), porte logique (14, 15) dont la sortie est reliée à l'entrée d'horloge (Cka, Ckb) de la bascule T (10, 11).

## Claims

1. A data transmission device comprising two lines over which digital data are flowing; the transmission device comprising an interface module (100) which forms the link between the lines (A, B) for transmitting the digital data from one line to the other,
• the interface module (100) comprising two management devices (Ga, Gb) dedicated each to a single line,
• each management device having means for detecting the presence on the line to which it is dedicated of a digital data to be transmitted to the other line, also having means for generating a digital control signal based on said digital data to be transmitted, also having means permitting it to have the generation of said digital control signal disabled by the other management device and finally having means for controlling the disabling of the generation of the digital control signal of the other management device dedicated to the other line, **characterized in that** the interface module also comprises:
• two potential monitoring devices (Ca, Cb) each monitoring a single line (A, B) for transmitting a digital data of the other line, the lines (A, B) over which the digital data travel having different electrical features such as high logic levels (Va, Vb) and do not have the same potential value among them, and that the low logic levels (Gnda, Gndb) do not have the same potential value among them,
• each potential monitoring device (Ca, Cb) having means for reproducing on the line (A, B) it monitors the digital data of the other transmission line (B, A) based on the digital control signal generated by the management device (Gb, Ga) dedicated to the other line (B, A), said digital control signal being applied to the control input (INCA, INCB) of said monitoring device (Ca, Cb), the value of the logic levels of the digital data thus reproduced then being adapted to the electrical features of the line where this digital data is transmitted,
• each monitoring device (Ca, Cb) comprising a first switch placed between the line (A, B) monitored by the monitoring device (Ca, Cb) and the positive supply terminal (Va, Vb) of said line, and a second switch placed between the line (A, B) controlled by the monitoring device (Ca, Cb) and the negative supply terminal (Gnda, Gndb) of said line (A, B), the first switch being controlled by the signal received on the control input (INCA, INCB) of the monitoring device (Ca, Cb), the second switch being controlled by the opposite of said signal by means of an inverter (1), the two switches having a low internal impedance compared to that of the line (A, B) controlled by the monitoring device (Ca, Cb) for a period during which they switch and a high internal impedance compared to that of said line (A, B) for a period during which they are kept in position,
• each management device (Ga, Gb) comprising a D-flip-flop (2, 3) whose data input (Da, Db) is connected to a potential (VCC) that corresponds to the logic 1 level, the D-flip-flop (2, 3) of which non-inverting output (Qa, Qb) is connected to a control input (INCB, INCA) of the monitoring device (Cb, Ca) controlling the other line (B, A), the inverting output (Qan, Qbn) of which D-flip-flop (2, 3) is intended to supply a disabling signal to the management device (Gb, Ga) dedicated to the other line (B, A), the reset-to-zero input (Ra, Rb) of which D-flip-flop (2, 3) is connected to the line (A, B) to which the management device (Ga, Gb) is dedicated, the management device (Ga, Gb) further comprising an inverter (4, 5), a delay cell (6, 7) and a logic AND-gate (8, 9), the line (A, B) to which the management device (Ga, Gb) is dedicated being connected to the input of the inverter (4, 5), the output of which inverter (4, 5) is connected to the input of the delay cell (6, 7), the output of which delay cell (6, 7) is connected to an input of the logic AND-gate of which another input is intended to receive a disabling signal coming from the monitoring device (Ga, Gb) dedicated to the other line (B, A), the output of which logic AND-gate (8, 9) is connected to a clock input (Cka, Ckb) of the D-flip-flop (2, 3).

2. A data transmission device comprising two lines over which digital data are flowing, the transmission device comprising an interface module (100) which forms the link between the lines (A, B) for transmitting the digital data from one line to the other,
• the interface module (100) comprising two management devices (Ga, Gb) dedicated each to a single line,
• each management device having means for detecting the presence on the line to which it is dedicated of a digital data to be transmitted to the other line, also having means for generating a digital control signal based on said digital data to be transmitted, also having means permitting it to have the generation of said digital control signal disabled by the other management device and finally having means for controlling the disabling of the generation of the digital control signal of the other management device dedicated to the other line, **characterized in that** the interface module also comprises:
• two potential monitoring devices (Ca, Cb) each monitoring a single line (A, B) for transmitting a digital data of the other line, the lines (A, B) over which the digital data travel having different electrical features such as high logic levels (Va, Vb) and do not have the same potential value among them, and that the low logic levels (Gnda, Gndb) do not have the same potential value among them,
• each potential monitoring device (Ca, Cb) having means for reproducing on the line (A, B) it monitors the digital data of the other transmission line (B, A) based on the digital control signal generated by the management device (Gb, Ga) dedicated to the other line (B, A), said digital control signal being applied to the control input (INCA, INCB) of said monitoring device (Ca, Cb), the value of the logic levels of the digital data thus reproduced then being adapted to the electrical features of the line where this digital data is transmitted,
• each monitoring device (Ca, Cb) comprising a first switch placed between the line (A, B) monitored by the monitoring device (Ca, Cb) and the positive supply terminal (Va, Vb) of said line, and a second switch placed between the line (A, B) monitored by the monitoring device (Ca, Cb) and the negative supply terminal (Gnda, Gndb) of said line (A, B), the first switch being controlled by the signal received on the control input (INCA, INCB) of the monitoring device (Ca, Cb), the second switch being controlled by the opposite of said signal by means of an inverter (1), the two switches having a low internal impedance compared to that of the line (A, B) controlled by the monitoring device (Ca, Cb) for a period during which they switch and a high internal impedance compared to that of said line (A, B) for a period during which they are kept in position,
• each management device (Ga, Gb) comprising a T-flip-flop (10, 11) which has an inverting output (Tan, Tbn) and a clock input (Cka, Ckb), said inverting output switching with each rising edge of the received signal on the clock input (Cka, Ckb), the non-inverting output (Ta, Tb) of which T-flip-flop (10, 11) is connected to the control input (INCB, INCA) of the monitoring device (Cb, Ca), controlling the other line (B, A), the inverting output (Tan, Tbn) of which T-flip-flop (10, 11) is intended to supply a disabling signal to the management device (Gb, Ga) dedicated to the other line (B, A), the inverting output (Tan, Tbn) of which T-flip-flop (10, 11) is initialized at the logic level that corresponds to the idle state of the lines during the operation of the transmission device, and **in that** each management device (Ga, Gb) further comprises a switch (Igaf, Igbf) which is opened under the control of the disabling signal coming from the management device (Gb, Ga) dedicated to the other line (B, A), a first terminal of which switch (Igaf, Igbf) is connected to the line (A, B) to which the management device (Ga, Gb) is dedicated and a second terminal of which switch is connected to the input of a delay cell (12, 13), the output of which delay cell (12, 13) is connected to a first input of a logic EXCLUSIVE-OR gate (14, 15) with two inputs, the second input of which logic gate (14, 15) is connected to said second terminal of the switch (Igaf, Igbf), the output (Tan, Tbn) of which logic gate (14, 15) is connected to the clock input (Cka, Ckb) of the T-flip-flop (10, 11).

3. A data transmission device comprising two lines over which digital data are flowing, the transmission device comprising an interface module (100) which forms the link between the lines (A, B) for transmitting the digital data from one line to the other,
• the interface module (100) comprising two management devices (Ga, Gb) dedicated each to a single line,
• each management device having means for detecting the presence on the line to which it is dedicated of a digital data to be transmitted to the other line, also having means for generating a digital control signal based on said digital data to be transmitted, also having means permitting it to have the generation of said digital control signal disabled by the other management device and finally having means for controlling the disabling of the generation of the digital control signal of the other management device dedicated to the other line, **characterized in that** the interface module also comprises:
• two potential monitoring devices (Ca, Cb) each monitoring a single line (A, B) for transmitting a digital data of the other line, the lines (A, B) over which the digital data travel having different electrical features such as high logic levels (Va, Vb) and do not have the same potential value among them, and that the low logic levels (Gnda, Gndb) do not have the same potential value among them,
• each potential monitoring device (Ca, Cb) having means for reproducing on the line (A, B) it monitors the digital data of the other transmission line (B, A) based on the digital control signal generated by the management device (Gb, Ga) dedicated to the other line (B, A), said digital control signal being applied to the control input (INCA, INCB) of said monitoring device (Ca, Cb), the value of the logic levels of the digital data thus reproduced then being adapted to the electrical features of the line where this digital data is transmitted,
• each monitoring device (Ca, Cb) comprising a first switch (Io) placed between the line (A, B) monitored by the monitoring device (Ca, Cb) and the positive supply terminal (Va, Vb) of said line (A, B) , and a second switch (If) placed between the line (A, B) monitored by the monitoring device (Ca, Cb) and the negative supply terminal (Gnda, Gndb) of said line (A, B), the two switches having a low internal impedance compared to that of the line monitored by the monitoring device for a period of time during which they switch and a high internal impedance compared to that of said line for a period of time during which they are kept in position, the two switches (Io, If) having opposite-polarity control inputs and being controlled by the signal received on the control input (INCA, INCB) of the monitoring device (Ca,Cb),
• each management device (Ga, Gb) comprising a D-flip-flop (2, 3) whose data input (Da, Db) is connected to a potential (VCC) that corresponds to the logic 1 level, a non-inverting output (Qa, Qb) of which D-flip-flop (2, 3) is connected to a control input (INCB, INCA) of the monitoring device (Cb, Ca), monitoring the other line (B, A), an inverting output (Qan, Qbn) of which D-flip-flop (2, 3) is intended to supply a disabling signal to the management device (Gb, Ga) dedicated to the other line (B, A), a reset-to-zero input (Ra, Rb) of which D-flip-flop (2, 3) is connected to the line (A, B) to which the management device (Ga, Gb) is dedicated, which management device (Ga, Gb) further comprises an inverter (4, 5), a delay cell (6, 7) and a logic AND gate (8, 9), to which line (A, B) the management device (Ga, Gb) is dedicated and which line is connected to the input of the inverter (4, 5), the output of which inverter (4, 5) is connected to the input of the delay cell (6, 7), the output of which delay cell (6, 7) is connected to an input of the logic AND gate (8, 9) another input of which is intended to receive the disabling signal coming from the management device (Ga, Gb) dedicated to the other line (B, A), the output of which logic AND gate (8, 9) is connected to a clock input (Cka, Ckb) of the D flip-flop (2, 3).

4. A data transmission device comprising two lines over which digital data are flowing, the transmission device comprising an interface module (100) which forms the link between the lines (A, B) for transmitting the digital data from one line to the other,
• the interface module (100) comprising two management devices (Ga, Gb) dedicated each to one line,
• each management device having means for detecting the presence on the line to which it is dedicated of a digital data to be transmitted to the other line, also having means for generating a digital control signal based on said digital data to be transmitted, also having means permitting it to have the generation of said digital control signal disabled by the other management device and finally having means for controlling the disabling of the generation of the digital control signal of the other management device dedicated to the other line, **characterized in that** the interface module also comprises:
• two potential monitoring devices (Ca, Cb) each monitoring a single line (A, B) for transmitting a digital data of the other line, the lines (A, B) over which the digital data travel having different electrical features such as the high logic levels (Va, Vb) and do not have the same potential value among them, and that the low logic levels (Gnda, Gndb) do not have the same potential value among them,
• each potential monitoring device (Ca, Cb) having means for reproducing on the line (A, B) it monitors the digital data of the other transmission line (B, A) based on the digital control signal generated by the management device (Gb, Ga) dedicated to the other line (B, A), said digital control signal being applied to the control input (INCA, INCB) of said monitoring device (Ca, Cb), the value of the logic levels of the digital data thus reproduced then being adapted to the electrical features of the line where this digital data is transmitted,
• each monitoring device (Ca, Cb) comprising a first switch (Io) placed between the line (A, B) monitored by the monitoring device (Ca, Cb) and the positive supply terminal (Va, Vb) of said line (A, B), and a second switch (If) placed between the line (A, B) monitored by the monitoring device (Ca, Cb) and the negative supply terminal (Gnda, Gndb) of said line (A, B), the two switches having a low internal impedance compared to that of the line monitored by the monitoring device for a period of time during which they switch and a high internal impedance compared to that of said line for a period of time during which they are kept in position, the two switches (Io, If) having opposite-polarity control inputs and being controlled by the signal received on the control input (INCA, INCB) of the monitoring device (Ca, Cb),
• each management device (Ga, Gb) comprising a T-flip-flop (10, 11) which has a non-inverting output (Ta, Tb), an inverting output (Tan, Tbn) and a clock input (Cka, Ckb), said outputs switching with each rising edge of the signal received on the clock input (Cka, Ckb), the non-inverting output (Ta, Tb) of which T-flip-flop (10, 11) is connected to the control input (INCB, INCA) of the monitoring device (Cb, Ca), which monitors the other line (B, A), the inverting output (Tan, Tbn) of which T-flip-flop (10, 11) is intended to supply a disabling signal to the management device (Gb, Ga) dedicated to the other line (B, A), the inverting output (Tan, Tbn) of which T-flip-flop (10, 11) are initialized at the logic level that corresponds to the idle state and to the inverse logic level of the lines during the operation of the transmission device, and **in that** each management device (Ga, Gb) further comprises a switch (Igaf, Igbf) which is opened under the control of the disabling signal coming from the management device (Gb, Ga) dedicated to the other line (B, A), a first terminal of which switch (Igaf, Igbf) is connected to the line (A, B) to which the management device (Ga, Gb) is dedicated and of which switch a second terminal is connected to the input of a delay cell (12, 13), the output of which delay cell (12, 13) is connected to a first input of a logic EXCLUSIVE-OR gate (14, 15) with two inputs, the second input of which logic gate (14, 15) is connected to said second terminal of the switch (Igaf, Igbf), the output (Tan, Tbn) of which logic gate (14, 15) is connected to the clock input (Cka, Ckb) of the T-flip-flop (10, 11).

## Patentansprüche

1. Datenübertragungsvorrichtung mit zwei Leitungen, durch die digitale Daten fließen, wobei die Übertragungsvorrichtung ein Schnittstellenmodul (100) enthält, welches die Verbindung zwischen den Leitungen (A, B) herstellt, um die digitalen Daten von der einen zur anderen Leitung zu übertragen,
. das Schnittstellenmodul (100) zwei Verwaltungsvorrichtungen (Ga, Gb) enthält, von denen jede einer einzigen Leitung gewidmet ist,
. jede Verwaltungsvorrichtung mit Mitteln versehen ist, um in der Leitung, der sie gewidmet ist, das Vorhandensein eines an die andere Leitung zu übertragenden digitalen Datensatzes zu erkennen, und auch mit Mitteln, um ein digitales Regelsignal anhand des besagten zu übertragenden digitalen Datensatzes zu erzeugen, und mit Mitteln, um es ihr zu ermöglichen, sich von der anderen Verwaltungsvorrichtung die Erzeugung des besagten digitalen Regelsignals deaktivieren zu lassen, und schließlich mit Mitteln, um die Deaktivierung der Erzeugung des digitalen Regelsignals der anderen Verwaltungsvorrichtung, welche der anderen Leitung gewidmet ist, zu regeln, **dadurch gekennzeichnet, dass** das Schnittstellenmodul außerdem enthält:
. zwei Potenzial-Kontrollvorrichtungen (Ca, Cb), die jeweils eine einzige Leitung (A, B) steuern, um einen digitalen Datensatz der anderen Leitung zu übertragen, wobei diejenigen Leitungen (A, B), durch die die digitalen Daten fließen, verschiedene elektrische Eigenschaften haben, wie dass die hohen logischen Ebenen (Va, Vb) von einer Leitung zur anderen nicht denselben Potenzialwert haben, und dass die niedrigen logischen Ebenen (Gnda, Gndb) von einer Leitung zur anderen nicht denselben Potenzialwert haben,
. jede Potenzial-Kontrollvorrichtung (Ca, Cb) ist mit Mitteln versehen, um in der Leitung (A, B), die sie steuert, den digitalen Datensatz der anderen zu übertragenden Leitung (B, A) anhand des digitalen Regelsignals zu reproduzieren, welches von der der anderen Leitung (B, A) gewidmeten Verwaltungsvorrichtung (Gb, Ga) erzeugt wurde, wobei das besagte digitale Regelsignal dem Regeleingang (INCA, INCB) der besagten Kontrollvorrichtung (Ca, Cb) zugeführt wird und der Wert der logischen Ebenen des so reproduzierten Datensatzes den elektrischen Merkmalen der Leitung, über die er übertragen wird, angepasst ist,
. jede Kontrollvorrichtung (Ca, Cb) einen ersten Unterbrecher aufweist, der zwischen der von der Kontrollvorrichtung (Ca, Cb) gesteuerten Leitung (A, B) und der positiven Versorgungsklemme (Va, Vb) der besagten Leitung angeordnet ist, und einen zweiten Unterbrecher, der zwischen der von der Kontrollvorrichtung (Ca, Cb) gesteuerten Leitung (A, B) und der negativen Versorgungsklemme (Gnda, Gndb) der besagten Leitung (A, B) angeordnet ist, wobei der erste Unterbrecher von dem am Regeleingang (INCA, INCB) der Kontrollvorrichtung (Ca, Cb) erhaltenen Signal geregelt wird, der zweite Unterbrecher von der Umkehrung des besagten Signals mit einem Inverter (1) geregelt wird, die beiden Unterbrecher eine schwache interne Impedanz in Bezug auf diejenige der von der Kontrollvorrichtung (Ca, Cb) gesteuerten Leitung (A, B) während einer Periode haben, in der sie schalten, und eine hohe interne Impedanz in Bezug auf diejenige der besagten Leitung (A, B) während einer Periode haben, in der sie in Position gehalten werden,
. jede Verwaltungsvorrichtung (Ga, Gb) einen Umschalter D (2, 3) enthält, dessen Dateneingang (Da, Db) mit einem der logischen Ebene 1 entsprechenden Potenzial (VCC) verbunden ist, wobei der nicht umkehrende Ausgang (Qa, Qb) von Umschalter D (2, 3) mit einem Regeleingang (INCB, INCA) der die andere Leitung (B, A) steuernden Kontrollvorrichtung (Cb, Ca) verbunden ist, der Umkehrausgang (Qan, Qbn) von Umschalter D (2, 3) für die Abgabe eines Deaktivierungssignals an die der anderen Leitung (B, A) gewidmeten Verwaltungsvorrichtung (Gb, Ga) bestimmt ist, der Eingang zur Null-Rückstellung (Ra, Rb) von Umschalter D (2, 3) mit der Leitung (A, B) verbunden ist, der die Verwaltungsvorrichtung (Ga, Gb) gewidmet ist, die Verwaltungsvorrichtung (Ga, Gb) außerdem einen Inverter (4, 5), eine Verzögerungszelle (6, 7) und ein logisches UND-Gate (8, 9) enthält, und die Leitung (A, B), der die Verwaltungsvorrichtung (Ga, Gb) gewidmet ist, mit dem Eingang des Inverters (4, 5) verbunden ist, dessen Ausgang mit dem Eingang der Verzögerungszelle (6, 7) verbunden ist, der Ausgang der Verzögerungszelle (6, 7) mit einem Eingang des logischen UND-Gates verbunden ist, von dem ein anderer Eingang für den Erhalt eines Deaktivierungssignals bestimmt ist, das aus der Verwaltungsvorrichtung (Gb, Ga) kommt, die einer anderen Leitung (B, A) gewidmet ist, und der Ausgang des logischen UND-Gates (8, 9) mit einem Uhreingang (Cka, Ckb) von Umschalter D (2, 3) verbunden ist.

2. Datenübertragungsvorrichtung mit zwei Leitungen, durch die digitale Daten fließen, wobei die Übertragungsvorrichtung ein Schnittstellenmodul (100) enthält, welches die Verbindung zwischen den Leitungen (A, B) herstellt, um die digitalen Daten von der einen zur anderen Leitung zu übertragen,
. das Schnittstellenmodul (100) zwei Verwaltungsvorrichtungen (Ga, Gb) enthält, von denen jede einer einzigen Leitung gewidmet ist,
. jede Verwaltungsvorrichtung mit Mitteln versehen ist, um in der Leitung, der sie gewidmet ist, das Vorhandensein eines an die andere Leitung zu übertragenden digitalen Datensatzes zu erkennen, und auch mit Mitteln, um ein digitales Regelsignal anhand des besagten zu übertragenden digitalen Datensatzes zu erzeugen, und mit Mitteln, um es ihr zu ermöglichen, sich von der anderen Verwaltungsvorrichtung die Erzeugung des besagten digitalen Regelsignals deaktivieren zu lassen, und schließlich mit Mitteln, um die Deaktivierung der Erzeugung des digitalen Regelsignals der anderen Verwaltungsvorrichtung, welche der anderen Leitung gewidmet ist, zu regeln, **dadurch gekennzeichnet, dass** das Schnittstellenmodul außerdem enthält:
. zwei Potenzial-Kontrollvorrichtungen (Ca, Cb), die jeweils eine einzige Leitung (A, B) steuern, um einen digitalen Datensatz der anderen Leitung zu übertragen, wobei diejenigen Leitungen (A, B), durch die die digitalen Daten fließen, verschiedene elektrische Eigenschaften haben, wie dass die hohen logischen Ebenen (Va, Vb) von einer Leitung zur anderen nicht denselben Potenzialwert haben, und dass die niedrigen logischen Ebenen (Gnda, Gndb) von einer Leitung zur anderen nicht denselben Potenzialwert haben,
. jede Potenzial-Kontrollvorrichtung (Ca, Cb) ist mit Mitteln versehen, um in der Leitung (A, B), die sie steuert, den digitalen Datensatz der anderen zu übertragenden Leitung (B, A) anhand des digitalen Regelsignals zu reproduzieren, welches von der der anderen Leitung (B, A) gewidmeten Verwaltungsvorrichtung (Gb, Ga) erzeugt wurde, wobei das besagte digitale Regelsignal dem Regeleingang (INCA, INCB) der besagten Kontrollvorrichtung (Ca, Cb) zugeführt wird und der Wert der logischen Ebenen des so reproduzierten Datensatzes den elektrischen Merkmalen der Leitung, über die er übertragen wird, angepasst ist,
. jede Kontrollvorrichtung (Ca, Cb) einen ersten Unterbrecher aufweist, der zwischen der von der Kontrollvorrichtung (Ca, Cb) gesteuerten Leitung (A, B) und der positiven Versorgungsklemme (Va, Vb) der besagten Leitung angeordnet ist, und einen zweiten Unterbrecher, der zwischen der von der Kontrollvorrichtung (Ca, Cb) gesteuerten Leitung (A, B) und der negativen Versorgungsklemme (Gnda, Gndb) der besagten Leitung (A, B) angeordnet ist, wobei der erste Unterbrecher von dem am Regeleingang (INCA, INCB) der Kontrollvorrichtung (Ca, Cb) erhaltenen Signal geregelt wird, der zweite Unterbrecher von der Umkehrung des besagten Signals mit einem Inverter (1) geregelt wird, die beiden Unterbrecher eine schwache interne Impedanz in Bezug auf diejenige der von der Kontrollvorrichtung (Ca, Cb) gesteuerten Leitung (A, B) während einer Periode haben, in der sie schalten, und eine hohe interne Impedanz in Bezug auf diejenige der besagten Leitung (A, B) während einer Periode haben, in der sie in Position gehalten werden,
. j ede Verwaltungsvorrichtung (Ga, Gb) einen Umschalter T (10, 11) mit einem Umkehrausgang (Tan, Tbn) und einem Uhreingang (Cka, Ckb) enthält, wobei der besagte Umkehrausgang bei jeder am Uhreingang (Cka, Ckb) erhaltenen aufsteigenden Signalfront umschaltet, der nicht umkehrende Ausgang (Ta, Tb) von Umschalter T (10, 11) mit dem Regeleingang (INCB, INCA) der die andere Leitung (B, A) steuernden Kontrollvorrichtung (Cb, Ca) verbunden ist, der Umkehrausgang (Tan, Tbn) von Umschalter T (10, 11) für die Abgabe eines Deaktivierungssignals an die der anderen Leitung (B, A) gewidmeten Verwaltungsvorrichtung (Gb, Ga) bestimmt ist, der Umkehrausgang (Tan, Tbn) von Umschalter T (10, 11) auf der logischen Ebene initialisiert wird, die dem Ruhezustand der Leitungen beim Einschalten der Übertragungsvorrichtung entspricht, dass jede Verwaltungsvorrichtung (Ga Gb) außerdem einen Unterbrecher (Igaf, Igbf) aufweist, dessen Öffnung vom Deaktivierungssignal geregelt wird, welches aus der der anderen Leitung (B, A) gewidmeten Verwaltungsvorrichtung (Gb, Ga) kommt, wobei die erste Klemme des Unterbrechers (Igaf, Igbf) mit der Leitung (A, B) verbunden ist, der die Verwaltungsvorrichtung (Ga, Gb) gewidmet ist, und dessen zweite Klemme an den Eingang einer Verzögerungszelle (12, 13) angeschlossen ist, der Ausgang der Verzögerungszelle (12, 13) mit einem Eingang eines logischen AUSSCHLIESSLICH-ODER-Gates (14, 15) mit zwei Eingängen verbunden ist, der zweite Eingang des logischen Gates (14, 15) an die zweite Klemme des Unterbrechers (Igaf, Igbf) angeschlossen ist, und der Ausgang (Tan, Tbn) des logischen Gates (14, 15) mit dem Uhreingang (Cka, Ckb) von Umschalter T (10, 11) verbunden ist.

3. Datenübertragungsvorrichtung mit zwei Leitungen, durch die digitale Daten fließen, wobei die Übertragungsvorrichtung ein Schnittstellenmodul (100) enthält, welches die Verbindung zwischen den Leitungen (A, B) herstellt, um die digitalen Daten von der einen zur anderen Leitung zu übertragen,
. das Schnittstellenmodul (100) zwei Verwaltungsvorrichtungen (Ga, Gb) enthält, von denen jede einer einzigen Leitung gewidmet ist,
. jede Verwaltungsvorrichtung mit Mitteln versehen ist, um in der Leitung, der sie gewidmet ist, das Vorhandensein eines an die andere Leitung zu übertragenden digitalen Datensatzes zu erkennen, und auch mit Mitteln, um ein digitales Regelsignal anhand des besagten zu übertragenden digitalen Datensatzes zu erzeugen, und mit Mitteln, um es ihr zu ermöglichen, sich von der anderen Verwaltungsvorrichtung die Erzeugung des besagten digitalen Regelsignals deaktivieren zu lassen, und schließlich mit Mitteln, um die Deaktivierung der Erzeugung des digitalen Regelsignals der anderen Verwaltungsvorrichtung, welche der anderen Leitung gewidmet ist, zu regeln, **dadurch gekennzeichnet, dass** das Schnittstellenmodul außerdem enthält:
. zwei Potenzial-Kontrollvorrichtungen (Ca, Cb), die jeweils eine einzige Leitung (A, B) steuern, um einen digitalen Datensatz der anderen Leitung zu übertragen, wobei diejenigen Leitungen (A, B), durch die die digitalen Daten fließen, verschiedene elektrische Eigenschaften haben, wie dass die hohen logischen Ebenen (Va, Vb) von einer Leitung zur anderen nicht denselben Potenzialwert haben, und dass die niedrigen logischen Ebenen (Gnda, Gndb) von einer Leitung zur anderen nicht denselben Potenzialwert haben,
. jede Potenzial-Kontrollvorrichtung (Ca, Cb) ist mit Mitteln versehen, um in der Leitung (A, B), die sie steuert, den digitalen Datensatz der anderen zu übertragenden Leitung (B, A) anhand des digitalen Regelsignals zu reproduzieren, welches von der der anderen Leitung (B, A) gewidmeten Verwaltungsvorrichtung (Gb, Ga) erzeugt wurde, wobei das besagte digitale Regelsignal dem Regeleingang (INCA, INCB) der besagten Kontrollvorrichtung (Ca, Cb) zugeführt wird und der Wert der logischen Ebenen des so reproduzierten Datensatzes den elektrischen Merkmalen der Leitung, über die er übertragen wird, angepasst ist,
. jede Kontrollvorrichtung (Ca, Cb) einen ersten Unterbrecher (Io) aufweist, der zwischen der von der Kontrollvorrichtung (Ca, Cb) gesteuerten Leitung (A, B) und der positiven Versorgungsklemme (Va, Vb) der besagten Leitung (A, B) angeordnet ist, und einen zweiten Unterbrecher (If), der zwischen der von der Kontrollvorrichtung (Ca, Cb) gesteuerten Leitung (A, B) und der negativen Versorgungsklemme (Gnda, Gndb) der besagten Leitung (A, B) angeordnet ist, die beiden Unterbrecher eine schwache interne Impedanz in Bezug auf diejenige der von der Kontrollvorrichtung gesteuerten Leitung während einer Periode haben, in der sie schalten, und eine hohe interne Impedanz in Bezug auf diejenige der besagten Leitung während einer Periode haben, in der sie in Position gehalten werden, die beiden Unterbrecher (Io, If) Regeleingänge entgegengesetzter Polarität haben und von dem am Regeleingang (INCA, INCB) der Kontrollvorrichtung (Ca, Cb) erhaltenen Signal geregelt werden,
. jede Verwaltungsvorrichtung (Ga, Gb) einen Umschalter D (2, 3) enthält, dessen Dateneingang (Da, Db) mit einem der logischen Ebene 1 entsprechenden Potenzial (VCC) verbunden ist, wobei der nicht umkehrende Ausgang (Qa, Qb) von Umschalter D (2, 3) mit einem Regeleingang (INCB, INCA) der die andere Leitung (B, A) steuernden Kontrollvorrichtung (Cb, Ca) verbunden ist, der Umkehrausgang (Qan, Qbn) von Umschalter D (2, 3) für die Abgabe eines Deaktivierungssignals an die der anderen Leitung (B, A) gewidmeten Verwaltungsvorrichtung (Gb, Ga) bestimmt ist, der Eingang zur Null-Rückstellung (Ra, Rb) von Umschalter D (2, 3) mit der Leitung (A, B) verbunden ist, der die Verwaltungsvorrichtung (Ga, Gb) gewidmet ist, die Verwaltungsvorrichtung (Ga, Gb) außerdem einen Inverter (4, 5), eine Verzögerungszelle (6, 7) und ein logisches UND-Gate (8, 9) enthält, und die Leitung (A, B), der die Verwaltungsvorrichtung (Ga, Gb) gewidmet ist, mit dem Eingang des Inverters (4, 5) verbunden ist, der Ausgang des Inverters (4, 5) mit dem Eingang der Verzögerungszelle (6, 7) verbunden ist, der Ausgang der Verzögerungszelle (6, 7) mit einem Eingang des logischen UND-Gates (8, 9) verbunden ist, von dem ein anderer Eingang für den Erhalt des Deaktivierungssignals bestimmt ist, das aus der Verwaltungsvorrichtung (Gb, Ga) kommt, die einer anderen Leitung (B, A) gewidmet ist, und der Ausgang des logischen UND-Gates (8, 9) mit einem Uhreingang (Cka, Ckb) von Umschalter D (2, 3) verbunden ist.

4. Datenübertragungsvorrichtung mit zwei Leitungen, durch die digitale Daten fließen, wobei die Übertragungsvorrichtung ein Schnittstellenmodul (100) enthält, welches die Verbindung zwischen den Leitungen (A, B) herstellt, um die digitalen Daten von der einen zur anderen Leitung zu übertragen,
. das Sclmittstellenmodul (100) zwei Verwaltungsvorrichtungen (Ga, Gb) enthält, von denen jede einer einzigen Leitung gewidmet ist,
. jede Verwaltungsvorrichtung mit Mitteln versehen ist, um in der Leitung, der sie gewidmet ist, das Vorhandensein eines an die andere Leitung zu übertragenden digitalen Datensatzes zu erkennen, und auch mit Mitteln, um ein digitales Regelsignal anhand des besagten zu übertragenden digitalen Datensatzes zu erzeugen, und mit Mitteln, um es ihr zu ermöglichen, sich von der anderen Verwaltungsvorrichtung die Erzeugung des besagten digitalen Regelsignals deaktivieren zu lassen, und schließlich mit Mitteln, um die Deaktivierung der Erzeugung des digitalen Regelsignals der anderen Verwaltungsvorrichtung, welche der anderen Leitung gewidmet ist, zu regeln, **dadurch gekennzeichnet, dass** das Schnittstellenmodul außerdem enthält:
. zwei Potenzial-Kontrollvorrichtungen (Ca, Cb), die jeweils eine einzige Leitung (A, B) steuern, um einen digitalen Datensatz der anderen Leitung zu übertragen, wobei diejenigen Leitungen (A, B), durch die die digitalen Daten fließen, verschiedene elektrische Eigenschaften haben, wie dass die hohen logischen Ebenen (Va, Vb) von einer Leitung zur anderen nicht denselben Potenzialwert haben, und dass die niedrigen logischen Ebenen (Gnda, Gndb) von einer Leitung zur anderen nicht denselben Potenzialwert haben,
. jede Potenzial-Kontrollvorrichtung (Ca, Cb) ist mit Mitteln versehen, um in der Leitung (A, B), die sie steuert, den digitalen Datensatz der anderen zu übertragenden Leitung (B, A) anhand des digitalen Regelsignals zu reproduzieren, welches von der der anderen Leitung (B, A) gewidmeten Verwaltungsvorrichtung (Gb, Ga) erzeugt wurde, wobei das besagte digitale Regelsignal dem Regeleingang (INCA, INCB) der besagten Kontrollvorrichtung (Ca, Cb) zugeführt wird und der Wert der logischen Ebenen des so reproduzierten Datensatzes den elektrischen Merkmalen der Leitung, über die er übertragen wird, angepasst ist,
. jede Kontrollvorrichtung (Ca, Cb) einen ersten Unterbrecher (Io) aufweist, der zwischen der von der Kontrollvorrichtung (Ca, Cb) gesteuerten Leitung (A, B) und der positiven Versorgungsklemme (Va, Vb) der besagten Leitung (A, B) angeordnet ist, und einen zweiten Unterbrecher (If), der zwischen der von der Kontrollvorrichtung (Ca, Cb) gesteuerten Leitung (A, B) und der negativen Versorgungsklemme (Gnda, Gndb) der besagten Leitung (A, B) angeordnet ist, die beiden Unterbrecher eine schwache interne Impedanz in Bezug auf diejenige der von der Kontrollvorrichtung gesteuerten Leitung während einer Periode haben, in der sie schalten, und eine hohe interne Impedanz in Bezug auf diejenige der besagten Leitung während einer Periode haben, in der sie in Position gehalten werden, die beiden Unterbrecher (Io, If) Regeleingänge entgegengesetzter Polarität haben und von dem am Regeleingang (INCA, INCB) der Kontrollvorrichtung (Ca, Cb) erhaltenen Signal geregelt werden,
. jede Verwaltungsvorrichtung (Ga, Gb) enhält einen Umschalter T (10,11) mit einem nicht umkehrenden Ausgang (Ta, Tb), einem Umkehrausgang (Tan, Tbn) und einem Uhreingang (Cka, Ckb) enthält, wobei die besagten Ausgänge bei jeder am Uhreingang (Cka, Ckb) erhaltenen aufsteigenden Signalfront umschalten, der nicht umkehrende Ausgang (Ta, Tb) von Umschalter T (10,11) mit dem Regeleingang (INCB, INCA) der die andere Leitung (B, A) steuernden Kontrollvorrichtung (Cb, Ca) verbunden ist, der Umkehrausgang (Tan, Tbn) von Umschalter T (10,11) für die Abgabe eines Deaktivierungssignals an die der anderen Leitung (B, A) gewidmeten Verwaltungsvorrichtung (Gb, Ga) bestimmt ist, die Umkehrausgänge (Tan, Tbn) und die nicht umkehrenden Ausgänge (Ta, Tb) von Umschalter T (10,11) respektive auf der logischen Ebene initialisiert werden, die dem Ruhezustand der Leitungen und der umgekehrten logischen Ebene beim Einschalten der Übertragungsvorrichtung entsprechen, dass jede Verwaltungsvorrichtung (Gb, Ga) außerdem einen Unterbrecher (Igaf, Igbf) aufweist, dessen Öffnung vom Deaktivierungssignal geregelt wird, welches aus der der anderen Leitung (B, A) gewidmeten Verwaltungsvorrichtung (Ga, Gb) kommt, wobei die erste Klemme des Unterbrechers (Igaf, Igbf) mit der Leitung (A, B) verbunden ist, der die Verwaltungsvorrichtung (Ga, Gb) gewidmet ist, und dessen zweite Klemme an den Eingang einer Verzögerungszelle (12, 13) angeschlossen ist, der Ausgang der Verzögerungszelle (12, 13) mit einem ersten Eingang eines logischen AUSSCHLIESSLICH-ODER-Gates (14, 15) mit zwei Eingängen verbunden ist, von denen der andere Eingang des logischen Gates (14, 15) an die besagte zweite Klemme des Unterbrechers (Igaf, Igbf) angeschlossen ist, und der Ausgang des logischen AUSSCHLIESSLICH-ODER-Gates ()14,15 mit dem Uhreingang (Cka, Ckb) von Umschalter T (10,11) verbunden ist.
